# EUROPÄISCHE PATENTSCHRIFT

(11) **EP 2 632 626 B1**
(45) Veröffentlichungstag und Bekanntmachung des Hinweises auf die Patenterteilung: **12.12.2018**
(21) Anmeldenummer: 11764686.9
(22) Anmeldetag: 04.10.2011
(51) Int. Cl.: B23K 11/11

(54) **FÜGEN EINES ERSTEN BAUTEILS MIT EINEM ZWEITEN BAUTEIL MITTELS EINES EINSEITIGEN WIDERSTANDSPUNKTSCHWEIßENS**
JOINING A FIRST COMPONENT TO A SECOND COMPONENT BY MEANS OF ONE-SIDED RESISTANCE SPOT WELDING
JONCTION D'UNE PREMIÈRE PIÈCE STRUCTURALE À UNE DEUXIÈME PIÈCE STRUCTURALE PAR SOUDAGE UNILATÉRAL PAR POINTS PAR RÉSISTANCE

(30) Priorität: 28.10.2010 DE 102010049865
(43) Veröffentlichungstag der Anmeldung: 04.09.2013
(73) Patentinhaber: Volkswagen Aktiengesellschaft, 38440 Wolfsburg (DE)
(72) Erfinder: VOIGT, Alexander, 04683 Naunhof (DE); GRAUL, Matthias, 38465 Brome (DE); JÜTTNER, Sven, 38444 Wolfsburg (DE)
(86) Internationale Anmeldenummer: PCT/EP2011/004938
(87) Internationale Veröffentlichungsnummer: WO 2012/055475

(56) Entgegenhaltungen:
- EP-A1- 1 366 845
- DE-A1- 2 342 575
- DE-A1-102008 047 800
- JP-A- S61 115 687
- JP-A- S61 202 821
- US-A- 3 768 148

## Beschreibung

Die Erfindung betrifft ein Verfahren zum Fügen eines ersten Bauteils mit einem zweiten Bauteil mittels eines einseitigen Widerstandspunktschweißens.

Widerstandspunktschweißen ist bekannt. Es können elektrisch leitfähige und aufschmelzbare Bauteile miteinander gefügt werden. Beim einseitigen Widerstandspunktschweißen wird einseitig an eines der Bauteile eine Schweißelektrode in einem elektrisch leitfähigen Anlagekontakt angepresst, wobei ein Schweißstrom durch die Bauteile hindurch von der Schweißelektrode zu einer Blindelektrode aufbaubar ist. Aus der WO 2004/087360 A1 ist ein einseitiges Widerstandspunktschweißen von Blechen, bei welchem ein Strompfad und eine Elektrodenkraft im Bereich eines Buckels in einem Oberblech konzentriert werden, bekannt. Die DE 199 47 206 B4 betrifft ein Verfahren zur Verbindung zweier Bauteile, insbesondere an einem Kraftfahrzeug, durch Buckelschweißen, bei dem ein Bauteil wenigstens einen erhabenen Schweißbuckel aufweist, der in einer Schweißzone, vorzugsweise einer Punktschweißzone, mit einer Anlagestelle am anderen Bauteil anliegt, wobei der Schweißbuckel einen Buckelsockel mit einer die Anlagestelle bildenden Sockelfläche aufweist, wobei in die Sockelfläche eine erhabene Buckelstruktur mit einer Mehrzahl von Buckelvorsprüngen eingeprägt ist, wobei beim Stromdurchgang durch die Schweißzone der Schweißbuckel von der Buckelstruktur her abschmilzt und am anderen Bauteil eine vorzugsweise dünne Schmelzschicht ausgebildet wird, so dass die beiden Bauteile nach deren Zusammenpressen im Bereich der Schweißzone eine Bauteilverbindung ohne Oberflächenbeschädigung ausbilden. Die DE 10 2009 023 792 A1 betrifft ein Fügeverfahren für einen Stapel aus drei Metallblechen, das unter Verwendung nur eines einzigen Schweißschrittes ausgeführt wird, wobei ein Zugang zu nur einer Plattenseite erforderlich ist. Eine innere Platte des Stapels weist ein paar darin gebildeter gegabelter Buckel auf, wobei zumindest ein erster Scheitel in eine Richtung weist und zumindest ein zweiter Scheitel in die entgegengesetzte Richtung weist. Ein erstes und ein zweites äußeres Metallblech werden mit der inneren Platte zusammengebaut, wobei die erste äußere Platte an dem zumindest einen ersten Scheitel anliegt und die zweite äußere Platte an dem zumindest einen zweiten Scheitel anliegt. Ein Buckelschweißgerät schweißt die Platten mit Hilfe eines Zugangs nur zu der ersten äußeren Platte, die den gegabelten Buckeln überlagert ist, wobei ein Großteil des Stromes durch die zweite äußere Platte fließt.

Aus der EP 1 366 845 A1 ist ein Schweißverfahren bekannt, das darauf fokussiert, dass Elektroden sphärisch ausgebildete Endbereiche aufweisen, die in einem Bereich des oberen zu schweißenden Werkstücks eine Deformation bewirken. Dabei wird dabei ein Stromfluss zwischen den Elektroden bewirkt, wobei der deformierte Bereich in Kontakt mit dem zweiten zu schweißenden Werkstück ist, so dass das erste und das zweite Werkstück miteinander verschweißt werden.

Aus der DE 10 2008 047 800 A1 ist ein Fügeverfahren bekannt, bei dem eine Masseelektrode in die gleiche Wirkrichtung gegen ein zweites Werkstück gedrückt wird, wie eine Fügeelektrode auf ein erstes Werkstück.

Aus der JP S61 202821A ist ein Verfahren zum Fügen gefalzter Flansche bekannt, wobei eine Stahlplatte als zweites Bauteil zwischen einem oberen Bauteil und einem unteren Bauteil eines ersten Bauteils angeordnet wird. Das erste Bauteil ist ein mit Stahl laminiertes Sperrholz, das eine Kunststoff-Harz Schicht beinhaltet, welche beim Fügen geschmolzen wird. Die Stahlplatte hat im Bereich, der zwischen den Falzbauteilen liegt eine konkave Form, wobei im konkaven Bereich ein festes Hitze isolierendes Material vorgesehen ist um das Stahllaminat vor zu großer Hitze zu schützen. Auf den oberen Bauteil wird im gefalzten Zustand eine Schweißelektrode gepresst, während auf der Stahlplatte eine Blindelektrode aufliegt. Beim Fügen wird die Schweißelektrode auf ungefähr 300° Celsius erhitzt, wobei die Schicht geschmolzen und ein Schweißpunkt zwischen dem ersten und zweiten Bauteil gesetzt wird Aufgabe der Erfindung ist es, ein verbessertes Fügen eines ersten Bauteils mit einem zweiten Bauteil mittels eines einseitigen Widerstandspunktschweißens zu ermöglichen, insbesondere eine Konzentration eines Schweißstroms in einem Bereich eines Widerstandspunktes des einseitigen Widerstandspunktschweißens zu verbessern.

Die Aufgabe ist bei einem Verfahren zum Fügen eines ersten Bauteils mit einem zweiten Bauteil mittels eines einseitigen Widerstandspunktschweißens gemäß Anspruch 1 gelöst.

Erfindungsgemäß wird zum Herstellen einer Konzentration des Schweißstroms zwischen Schweißelektrode und dem Bereich des Widerstandspunktes ein Band der Abstandshaltevorrichtung zwischen die Bauteile eingeführt, wobei die Bauteile während des Widerstandspunktschweißens durch die zumindest eine Aussparung hindurch einander im Bereich des jeweiligen Widerstandspunkts lokal einander angenähert werden und den jeweiligen Widerstandspunkt umgebend die isolierende Wirkung des Isolierbandes erhalten bleibt.

Vorteilhaft können die zwei Bauteile mittels des eingebrachten Isolierbandes gleichzeitig voneinander beabstandet und elektrisch gegeneinander isoliert werden.

Vorteilhaft können die zwei Bauteile im Bereich der Aussparung des Isolierbandes durch das Anpressen der Schweißelektrode soweit aneinander angenähert werden, dass diese sich berühren und dadurch der Schweißstrom fließen kann.

Bei einer weiteren, nicht von der Erfindung erfassten Ausführungsform des Verfahrens ist vorgesehen, dass die Abstandshaltevorrichtung zumindest einen Vorsprung zumindest eines der Bauteile aufweist. Dabei kann eines der Bauteile den Vorsprung der Abstandshaltevorrichtung aufweisen, wobei keine separate Abstandshaltevorrichtung relativ zu den Bauteilen positioniert werden muss. Vielmehr kann die Abstandshaltevorrichtung direkt bei einem Herstellvorgang des entsprechenden Bauteils mit an diesem angebracht werden. Dabei ist es möglich, die Abstandshaltevorrichtung einstückig mit dem betreffenden Bauteil auszuführen. Alternativ und/oder zusätzlich kann die Abstandshaltevorrichtung an dem entsprechenden Bauteil, insbesondere während eines Herstellprozesses, separat angebracht werden. Dabei ist es denkbar, dass die separat angebrachte Abstandshaltevorrichtung isolierende Eigenschaften aufweist.

Eine weitere, nicht von der Erfindung umfasste Ausführungsform des Verfahrens wird mit Einbringen des Isolierbandes und beabstandet dazu, insbesondere parallel beabstandet, eines weiteren Isolierbandes zum Herstellen des Abstands, wobei der Widerstandspunkt zwischen den Isolierbändern liegt, durchgeführt. Die Bauteile können neben dem Widerstandspunkt mittels der zwei Isolierbänder beabstandet und elektrisch isoliert voneinander angeordnet werden. Der eigentliche Schweißvorgang, also die Annäherung der Bauteile durch das Aufpressen der Schweißelektrode und das Einbringen des Schweißstroms, kann zwischen den Isolierbändern erfolgen.

Eine weitere, nicht von der Erfindung umfasste Ausführungsform des Verfahrens wird mit Einbringen eines elektrischen Vorwärmstroms in die Bauteile und dabei Aufschmelzen des Isolierbands zumindest im Bereich des Widerstandspunktes durchgeführt. Das verflüssigte Isolierband kann beim Anpressen der Schweißelektrode verdrängt werden, so dass sich im Bereich des Widerstandspunktes die zwei Bauteile berühren, so dass der Schweißstrom zum Aufschmelzen und Fügen der Bauteile fließen kann.

Eine weitere, nicht von der Erfindung umfasste Ausführungsform des Verfahrens wird mit Einbringen des Vorwärmstroms über einen die Bauteile elektrisch kontaktierenden Fixierpunkt durchgeführt. Trotz der beabstandeten Anordnung der Bauteile und der isolierenden Wirkung des Isolierbandes kann der Vorwärmstrom über den Fixierpunkt geleitet werden. Zusätzlich und/oder alternativ können die Bauteile mittels des Fixierpunktes in einer Lage relativ zueinander vorfixiert werden. Alternativ und/oder zusätzlich ist es denkbar, das Verfahren für mehrere Widerstandspunkte beziehungsweise daraus resultierende Schweißpunkte an den zwei Bauteilen durchzuführen. In diesem Fall kann der Vorwärmstrom über bereits vorhandene Schweißpunkte geführt werden, wobei der Vorwärmstrom erstmalig über den Fixierpunkt und anschließend über bereits hergestellte Schweißpunkte fließt.

Eine weitere, nicht von der Erfindung umfasste Ausführungsform des Verfahrens wird mit Einbringen eines zumindest im Bereich des Schweißpunktes bereichsweise elektrisch leitfähigen Bandes zum Herstellen des Abstandes, Einbringen des elektrischen Vorwärmstroms über das elektrisch leitfähige Band und Aufschmelzen des elektrisch leitfähigen Bandes mittels des elektrischen Vorwärmstroms durchgeführt. Vorteilhaft kann ein elektrischer Widerstand des leitfähigen Bandes so eingestellt werden, dass dieses sich aufgrund des Vorwärmstroms vergleichsweise stark erwärmt und dabei aufgeschmolzen wird. Für ein erstmaliges Herstellen eines Schweißpunktes ist kein Fixierpunkt zum Einbringen des Vorwärmstroms notwendig. Vielmehr kann dieser direkt über das elektrisch leitfähige Band hergestellt werden. Das mittels des Vorwärmstroms aufgeschmolzene elektrisch leitfähige Band kann durch das Aufpressen der Schweißelektrode und das damit verbundene Annähern der Bauteile im Bereich des Widerstandspunktes verdrängt werden, so dass der Schweißstrom fließen kann. Das Annähern der Bauteile kann unter einer elastischen Verformung eines der Bauteile aufgrund des Anpressdrucks der Schweißelektrode erfolgen.

Die Aufgabe ist außerdem bei einer Schweißvorrichtung zum einseitigen Widerstandspunktschweißen mit einer Blindelektrode und einer Schweißelektrode gelöst, wobei die Schweißvorrichtung zum Durchführen des vorab beschriebenen Verfahrens konstruiert ist. Es ergeben sich die vorab beschriebenen Vorteile.

Weitere Vorteile, Merkmale und Einzelheiten ergeben sich aus der nachfolgenden Beschreibung, in der unter Bezug auf die Zeichnung ein Ausführungsbeispiel im Einzelnen beschrieben ist. Gleiche, ähnliche und/oder funktionsgleiche Teile sind mit gleichen Bezugszeichen versehen.

Es zeigen:
- Fig. 1: eine schematische Seitenansicht einer teilweise dargestellten Schweißvorrichtung zum einseitigen Widerstandspunktschweißen zusammen mit zwei beabstandet zueinander angeordneten Bauteilen, wobei eine Abstandshaltevorrichtung mit Vorsprüngen vorgesehen ist, die nicht von der Erfindung umfasst ist;
- Fig. 2: die in Figur 1 gezeigte, nicht von der Erfindung umfasste Schweißvorrichtung, wobei die zwei Bauteile lokal im Bereich eines Widerstandspunkts zum Herstellen eines elektrisch leitenden Anlagekontakts aneinander angenähert sind;
- Fig. 3: eine schematische Draufsicht auf den Bereich des Widerstandspunktes der zwei in den Figuren 1 und 2 gezeigten Bauteile;
- Fig. 4: eine erfindungsgemäße, schematische Draufsicht zweier zum Durchführen des einseitigen Widerstandspunktschweißens vorbereiteter Bauteile, wobei diese mittels eines Bandes zueinander beabstandet sind;
- Fig. 5 - 7: jeweils eine schematische Draufsicht zweier zum Durchführen des einseitigen Widerstandspunktschweißens vorbereiteter Bauteile, wobei diese mittels eines Bandes zueinander beabstandet sind, wobei die Ausführungsformen nicht von der Erfindung umfasst sind;
- Fig. 8: eine schematische Seitenansicht der in den Fig. 1 und 2 gezeigten Schweißvorrichtung, wobei im Unterschied die zwei Bauteile analog der Darstellungen Figuren 4 bis 7 mittels eines Bandes voneinander beabstandet sind;
- Fig. 9: die in Fig. 8 gezeigte Schweißvorrichtung, wobei das Band aufgeschmolzen ist, was nicht von der Erfindung umfasst ist, und der Abstand der Bauteile im Bereich des Widerstandspunkts auf 0 reduziert ist;
- Fig. 10, 11: jeweils eine schematische Schnittansicht zweier mittels zwei Elektroden kontaktierter Bauteile zum Verdeutlichen eines Vorwärmstroms und eines Schweißstroms.

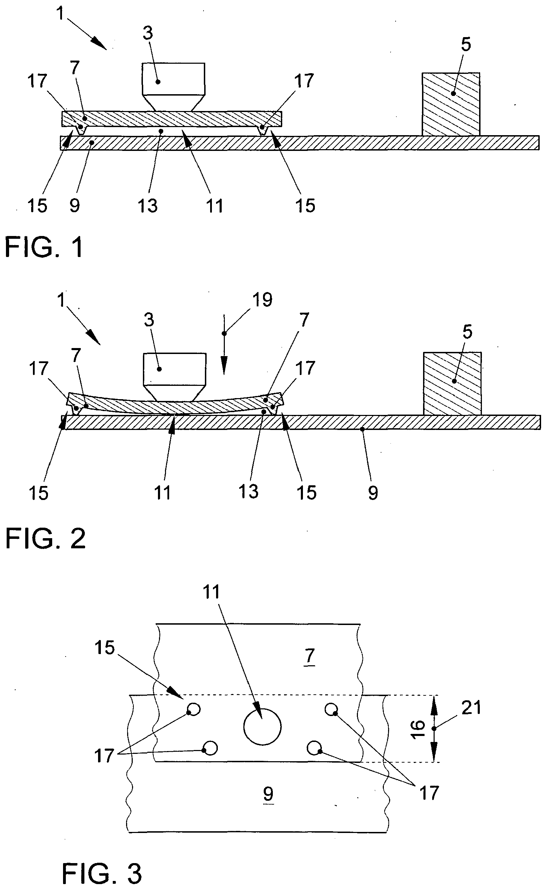

Figur 1 zeigt eine schematische Seitenansicht einer nur teilweise dargestellten Schweißvorrichtung 1. Die Schweißvorrichtung 1 weist eine Schweißelektrode 3 und eine Blindelektrode 5 auf. Zwischen der Schweißelektrode 3 und der Blindelektrode 5 kann eine Spannung zum Induzieren eines Vorwärmstroms und/oder eines Schweißstroms zum Fügen eines ersten Bauteils 7 und eines zweiten Bauteils 9 angelegt werden. Bei dem ersten Bauteil 7 kann es sich beispielsweise um ein Oberblech und bei dem zweiten Bauteil 9 um ein Unterblech handeln. Insbesondere kann es sich bei den Bauteilen 7 und 9 um Bauteile, insbesondere Karosserieteile, eines Kraftfahrzeugs handeln.

Gemäß der Darstellung der Fig. 1 sind die Bauteile 7 und 9 für ein einseitiges Widerstandspunktschweißen mittels der Schweißvorrichtung 1 vorbereitet. Die Schweißelektrode 3 und die Blindelektrode 5 sind von derselben Seite auf die Bauteile 7 und 9 angebracht beziehungsweise anbringbar beziehungsweise mit diesen elektrisch kontaktiert beziehungsweise kontaktierbar.

Die Bauteile 7 und 9 sind im Bereich eines Widerstandspunkts 11 in einem Abstand 13 zueinander angeordnet. Bei den Bauteilen 7 und 9 handelt es sich insbesondere um ebene Bauteile, die in der in Fig. 1 gezeigten vorbereiteten relativen Lage zueinander den Abstand 13 zueinander aufweisen. Alternativ und/oder zusätzlich kann es sich bei den Bauteilen 7 und 9 auch um gekrümmte Bauteile handeln, die den Abstand 13, insbesondere im Bereich des Widerstandspunktes 11, aufweisen.

Der Abstand 13 ist mittels einer Abstandshaltevorrichtung 15 hergestellt. Die Abstandshaltevorrichtung 15 weist gemäß der nicht von der Erfindung umfassten Ausführungsform gemäß der Figuren 1 bis 3 Vorsprünge 17 auf, die einstückig mit dem ersten Bauteil 7 verbunden sind. Alternativ und/oder zusätzlich können die Vorsprünge 17 mit dem zweiten Bauteil 9 einstückig verbunden sein, was nicht von der Erfindung umfasst ist. Alternativ und/oder zusätzlich können die Vorsprünge 17 der Abstandshaltevorrichtung 15 als separate Bauteile ausgeführt sein, die beispielsweise zum Vorbereiten des Widerstandspunktschweißens zwischen den Bauteilen 7 und 9 zum Herstellen des Abstands 13 angeordnet werden, was jedoch nicht von der Erfindung umfasst ist.

Fig. 2 zeigt die in Fig. 1 gezeigte Schweißvorrichtung während eines Schweißvorgangs zum Durchführen des Widerstandspunktschweißens. Dabei wird die Schweißelektrode 3 mit einer Anpresskraft gegen das erste Bauteil 7 gepresst. Die Anpresskraft sowie deren Richtung ist in Fig. 2 mittels eines Pfeils 19 symbolisiert. Aufgrund der Anpresskraft der Schweißelektrode 3 wird das erste Bauteil 7 elastisch verformt, so dass dieses eine Krümmung aufweist. Vorteilhaft wird dadurch im Bereich des Widerstandspunkts 11 der Abstand 13 auf einen Wert von 0 verringert, so dass sich das erste Bauteil 7 und das zweite Bauteil 9 in einem elektrisch leitenden Anlagekontakt zueinander befinden. Vorteilhaft kann dadurch ein nicht näher dargestellter Schweißstrom von der Schweißelektrode 3 über das erste Bauteil 7, das zweite Bauteil 9 zur Blindelektrode 5 fließen. Dabei wird vorteilhaft der Widerstandspunkt 11 der Bauteile 7 und 9 aufgeschmolzen, so dass sich zum Fügen der Bauteile 7 und 9 eine Schweißlinse bildet. Vorteilhaft kann durch das lokale Überwinden des Abstands 13 im Bereich des Widerstandspunkts 11 der Schweißstrom der Schweißvorrichtung 1 in dem Widerstandspunkt 11 konzentriert werden, so dass sich die Schweißlinse an dem ersten Bauteil 7 und dem zweiten Bauteil 9 bilden kann.

An den nicht von der Erfindung umfassten Vorsprüngen 17 der Abstandshaltevorrichtung 15 bildet sich ein Nebenschluss, der einen Nebenstrom bedingt. Vorteilhaft ist dieser jedoch so gering, dass dadurch der eigentliche Schweißvorgang nicht beeinträchtigt wird. Gegebenenfalls kann ein mittels der Schweißvorrichtung 1 erzeugter Stromfluss um den über den Nebenschluss fließenden elektrischen Strom erhöht werden.

Fig. 3 zeigt eine Draufsicht auf die zwei in den Fig. 1 und 2 gezeigten Bauteile 7 und 9. Es ist der Widerstandspunkt 11 zu erkennen, der in Fig. 3 mittels eines Kreises symbolisiert ist. Der Widerstandspunkt 11 kann auch als Schweißzone bezeichnet werden, in der sich die zum Fügen der Bauteile 7 und 9 notwendige Schweißlinse bildet.

In der Darstellung gemäß der Fig. 3 ist zu erkennen, dass sich das erste Bauteil 7 und das zweite Bauteil 9 in einer Überlappungszone 21, die mittels eines Doppelpfeils und gestrichelten Linien in Fig. symbolisiert ist, überlappen. Die Überlappungszone 21 kann beispielsweise zwischen 10 und 30 mm, insbesondere zwischen 12 und 20 mm, insbesondere ungefähr 16 mm, betragen. Es ist zu erkennen, dass die Abstandshaltevorrichtung 15 insgesamt vier trapezförmig zueinander angeordnete, nicht von der Erfindung umfasste Vorsprünge 17 aufweist, die auch als Distanzbuckel bezeichnet werden können. Die nicht von der Erfindung umfassten Vorsprünge 17 sind außerhalb des Widerstandspunktes 11 angeordnet, wobei über diese lediglich ein zum Schweißen nicht ausreichender Nebenstrom fließt. Vorteilhaft stellen diese lediglich den Abstand 13 zwischen den Bauteilen 7 und 9 her, der vorteilhaft außerhalb des Widerstandspunktes 11 erhalten bleibt, so dass vorteilhaft lediglich über die Vorsprünge 17 der Abstandshaltevorrichtung 15 und dem Widerstandspunkt 11 selbst ein elektrischer Stromfluss stattfindet. Dadurch kann vorteilhaft der zum Schweißen der Bauteile 7 und 9 erforderliche Schweißstrom in den Widerstandspunkt 11 der Bauteile 7 und 9 konzentriert werden.

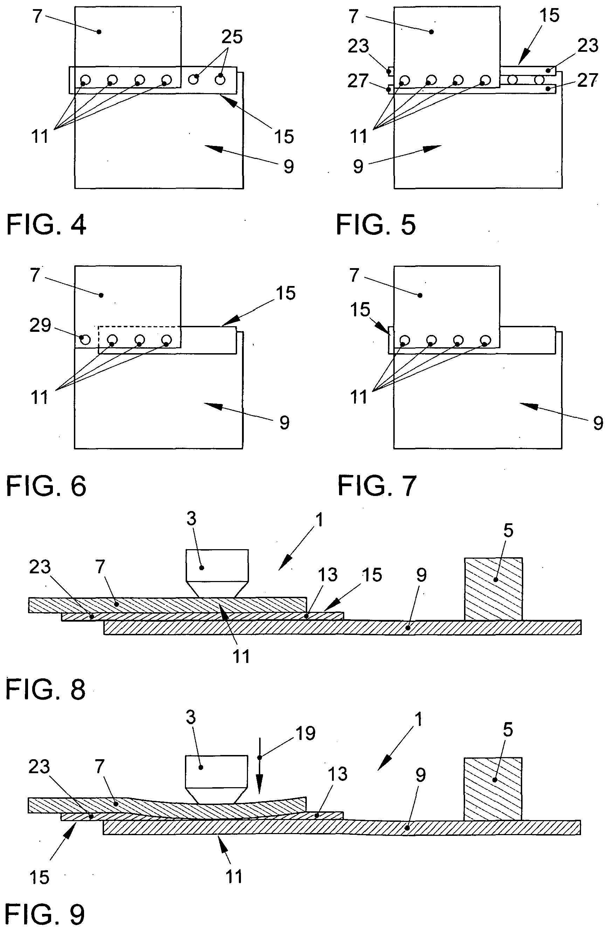

Die Fig. 4 - 7 zeigen jeweils eine schematische Draufsicht auf zwei beabstandet zueinander angeordnete Bauteile 7 und 9, die mittels der Schweißvorrichtung 1 fügbar sind, analog der Darstellung der Fig. 3. Im Unterschied weisen die Bauteile 7 und 9 gemäß der Darstellung der Fig. 4 - 6 jeweils mehrere Widerstandspunkte 11 auf und sind jeweils mittels eines Bandes 23 voneinander beabstandet. Dabei zeigt Fig. 4 die von der Erfindung umfasste Ausführungsform.

Gemäß der von der Erfindung umfassten Darstellung der Fig. 4 handelt es sich um ein Band 23 mit isolierenden Eigenschaften, also ein Isolierband. Das in Fig. 4 dargestellte Band 23 ist zwischen den Bauteilen 7 und 9 angeordnet und weist im Bereich der Widerstandspunkte 11 Aussparungen 25 auf. Die Aussparungen 25 sind gemäß der Darstellung der Fig. 4 beispielhaft rund ausgeführt. Die Aussparungen 25 können jedoch auch eine andere geometrische Form, beispielsweise quadratisch und/oder Ähnliches aufweisen. Vorteilhaft können die Bauteile 7 und 9 während des Widerstandspunktschweißens durch die Aussparungen 25 hindurch einander im Bereich des jeweiligen Widerstandspunkts 11 lokal einander angenähert werden, wobei vorteilhaft den jeweiligen Widerstandspunkt 11 umgebend die isolierende Wirkung des Bandes 23 erhalten bleibt.

Fig. 5 zeigt ein weiteres, nicht von der Erfindung umfasstes Ausführungsbeispiel, wobei das Band 23 schmaler ausgeführt ist, so dass dieses beispielsweise ungefähr lediglich 1/3 der Überlappungszone 21 überdeckt. Beabstandet zu dem schmaleren Band 23 ist ein weiteres Band 27 angeordnet. Die Bänder 23 und 27 sind parallel zueinander und beabstandet zueinander im Bereich der Überlappungszone 21 angeordnet. Zwischen den Bändern 23 und 27 im Bereich der Widerstandspunkte 11 verbleibt ein Freiraum, dem die Bauteile 7 und 9 vor dem Durchführen des Widerstandspunktsschweißens beabstandet voneinander angeordnet sind, wobei in dem Freiraum des Abstands 13 ein überwindbarer Luftraum verbleibt, der durch das Anpressen der Schweißelektrode 3 auf einen Abstand von 0 verringert werden kann, so dass die Bauteile 7 und 9 sich an dem jeweiligen Widerstandspunkt 11 zum Herstellen des elektrischen Kontakts berühren. Die elektrisch isolierende Wirkung der Bänder 23 und 27 sowie eine elektrische Isolierung aufgrund des verbleibenden Luftraums bleibt umgebend des Widerstandspunkts 11 erhalten, so dass vorteilhaft der Schweißstrom des Widerstandspunktschweißens im jeweiligen Widerstandspunkt 11 konzentrierbar ist.

Fig. 6 zeigt eine weitere, nicht von der Erfindung umfasste Ausführungsform der Schweißvorrichtung 1, wobei im Unterschied das Band 23 keine Aussparungen 25 aufweist. Das Band 23 weist gemäß der nicht von der Erfindung umfassten Darstellung der Fig. 6 thermoplastische Eigenschaften auf und kann durch Erwärmen aufgeschmolzen werden. Zum Aufschmelzen des Bandes 23 gemäß der Fig. 6 sind die Bauteile 7 und 9 mittels eines elektrisch leitfähigen Fixierpunktes 29 elektrisch miteinander kontaktiert. Über den Fixierpunkt 29 kann ein Vorwärmstrom zum Aufschmelzen des Bands 23 im Bereich des Widerstandspunkts 11 in die Bauteile 7 und 9 eingeleitet werden. Beim eigentlichen Schweißvorgang, also beim Anpressen der Schweißelektrode 3 wird das aufgeschmolzene Band 23 lokal verdrängt, so dass im Bereich des Widerstandspunkts 11 ein elektrisch leitfähiger Anlagekontakt zwischen den Bauteilen 7 und 9 hergestellt werden kann. Das aufgeschmolzene Band 23 weist auch in flüssigem Zustand elektrisch isolierende Eigenschaften auf, so dass vorteilhaft der elektrische Schweißstrom im Bereich des Widerstandspunkts 11 konzentriert werden kann.

Es ist zu erkennen, dass im Bereich des Fixierpunkts 29 das Band 23 nicht vorgesehen ist, beziehungsweise benachbart zu diesem endet.

Gemäß der nicht von der Erfindung umfassten Darstellung der Fig. 7 ist zwischen den Bauteilen 7 und 9 ein Band 23 mit elektrisch leitfähigen Eigenschaften angeordnet. In der Überlappungszone 21 befindet sich also zwischen den Bauteilen 7 und 9 das elektrisch leitfähige Band 23, wobei über dieses der Vorwärmstrom geführt werden kann. Das elektrisch leitfähige Band 23 gemäß der nicht von der Erfindung umfassten Darstellung 7 weist keine Aussparungen auf, ist also durchgängig in der Überlappungszone 21 zwischen den Bauteilen 7 und 9 zum Herstellen des Abstands 13 angeordnet. Im Unterschied zur nicht von der Erfindung umfassten Darstellung gemäß Fig. 6, wobei das Band 23 isolierende Eigenschaften aufweist und ebenfalls mit Ausnahme des Fixierpunkts 29 durchgängig in der Überlappungszone 21 zwischen den Bauteilen 7 und 9 angeordnet ist, ist gemäß der nicht von der Erfindung umfassten Darstellung der Fig. 7 kein Fixierpunkt 29 erforderlich. Vielmehr kann der Vorwärmstrom über das elektrisch leitfähige Eigenschaften aufweisende Band 23 selbst geführt werden. Das elektrisch leitfähige Band 23 kann ebenfalls thermoplastische Eigenschaften aufweisen und ist aufschmelzbar. Die elektrisch leitfähigen Eigenschaften können so eingestellt werden, dass sich eine sichere Erwärmung des Bandes 23 gemäß der Fig. 7 beim Durchleiten des Vorwärmstroms ergibt. Analog zum vorab beschriebenen Vorgehen kann auch das elektrisch leitfähige Band so aufgeschmolzen werden, dass dieses beim Aufpressen der Schweißelektrode 3 lokal im Bereich des Widerstandspunkts 11 zum Herstellen des elektrischen Anlagekontakts zwischen den Bauteilen 7 und 9 verdrängt werden kann.

Dieser Vorgang ist in Fig. 9 dargestellt, wobei sich das erste Bauteil 7 durch das Aufpressen der Schweißelektrode 3 verformt, so dass sich das erste Bauteil 7 unter Verdrängung des Bandes 23 lokal im Bereich des Widerstandspunkts 11 dem zweiten Bauteil 9 annähert.

Die Darstellung der Fig. 9 zeigt grundsätzlich die Verdrängung des aufgeschmolzenen Bandes 23 analog der nicht von der Erfindung umfassten Fig. 6 und 7. Analog, jedoch gegebenenfalls ohne die Notwendigkeit der Verflüssigung durch einen Vorwärmstrom, verhält es sich bei dem Band 23 mit Aussparung 25 der von der Erfindung umfassten Ausführungsform nach Fig. 4 beziehungsweise den beabstandeten Bändern 23 und 27 gemäß der nicht von der Erfindung umfassten Darstellung in Fig. 5, wobei jeweils ebenfalls im Bereich des Widerstandspunktes 11 die Bauteile 7 und 9 in einen elektrischen Anlagekontakt einander angenähert werden.

Fig. 8 zeigt die schematische Seitenansicht der Schweißvorrichtung 1 der Fig. 9. In Fig. 8 ist zu erkennen, dass zwischen den Bauteilen 7 und 9 das Band 23 zum Herstellen des Abstands 13 angeordnet ist. Gemäß den Darstellungen der Fig. 4 - 6 stellt das Band 23 eine Isolierschicht dar, wobei nur die Ausführungsform nach Fig. 4 von der Erfindung umfasst ist. Gemäß der nicht von der Erfindung umfassten Darstellung der Fig. 7 weist das Band 23 elektrisch leitfähige Eigenschaften auf und kann einen Vorwärmstrom direkt in eine Aufschmelzung umwandeln.

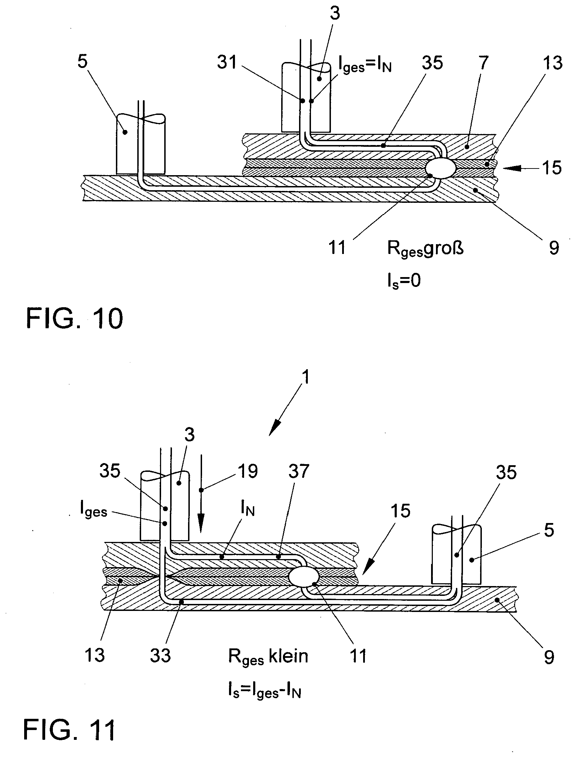

Fig. 10 zeigt eine schematische Ansicht zweier Bauteile 7 und 9 zusammen mit einer Schweißelektrode 3 und einer Blindelektrode 5. Zwischen den Bauteilen 7 und 9 ist ein Band 23 mit isolierenden Eigenschaften angeordnet. In der Darstellung der Fig. 10 rechts neben der Schweißelektrode 3 und der Blindelektrode 5 befindet sich ein nicht von der Erfindung umfasster Fixierpunkt 29 oder ein bereits verschweißter Widerstandspunkt 11. Es ist zu erkennen, dass ein Vorwärmstrom von der Schweißelektrode 3 über den nicht von der Erfindung umfassten Fixierpunkt 29 beziehungsweise den bereits verschweißten Widerstandspunkt 11 durch das erste Bauteil 7 und das zweite Bauteil 9 zur Blindelektrode 5 fließt. Dabei wird das Band 23 erwärmt und aufgeschmolzen.

Fig. 11 zeigt die in Fig. 10 gezeigte Schnittansicht der Bauteile 7 und 9 zusammen mit der Schweißelektrode 3 und der Blindelektrode 5. Im Unterschied zur Darstellung der Fig. 10 ist in Fig. 11 bereits der Abstand 13 durch das Anpressen der Schweißelektrode 3 auf 0 verringert, so dass sich die Bauteile 7 und 9 im Bereich des Widerstandspunkts 11 in einem elektrisch leitfähigen Anlagekontakt befinden. Es ist zu erkennen, dass sich ein über die Schweißelektrode 3 und die Blindelektrode 5 geführter Gesamtstrom 35 in einen Nebenstrom 37 und einen Schweißstrom 33 aufteilen. Der Nebenstrom 37 fließt über den bereits hergestellten Widerstandspunkt 11. Der Schweißstrom 33, der wesentlich größer ist, fließt über den unterhalb der Schweißelektrode 3 liegenden Widerstandspunkt 11 und führt zum Aufschmelzen des ersten Bauteils 7 und des zweiten Bauteils 9.

Gemäß der Darstellung der Fig. 10 fließt der Gesamtstrom 35 als Vorwärmstrom 31 über den nicht von der Erfindung umfassten Fixierpunkt 29 beziehungsweise den bereits herstellten Widerstandspunkt 11, stellt also den Vorwärmstrom 31 beziehungsweise ist mit diesen identisch.

Bei dem ersten Bauteil 7, bei dem es sich um ein Oberblech handeln kann, sind die nicht von der Erfindung umfassten Distanzbuckel der Abstandshaltevorrichtung 15 vorgesehen. Erfindungsgemäß ist ein Band 23 vorgesehen, um die Bauteile 7 und 9 in dem Abstand 13 zueinander anzuordnen, wie es in Fig. 4 gezeigt ist. Nicht von der Erfindung umfasst weist die Abstandshaltevorrichtung 15 das in den Fig. 5 - 7 dargestellte Band 23 beziehungsweise das weitere Band 27 auf. Dadurch kann der Schweißstrom 33 so in dem Widerstandspunkt 11 konzentriert werden, dass sich vorteilhaftere Prozessfenster beziehungsweise größere Prozessfenster ergeben und/oder bestimmte Materialkombinationen der Bauteile 7 und 9 mittels des Widerstandspunktschweißens fügbar werden. Vorteilhaft werden Strompfade des Schweißstroms 33 auf den Bereich des Widerstandspunkts 11 eingeschnürt.

Die nicht von der Erfindung umfassten Vorsprünge 17 beziehungsweise Distanzbuckel der Abstandshaltevorrichtung 15 können in das erste Bauteil 7 geprägt werden, so dass ein isolierender Luftspalt des Abstands 13 zwischen den Bauteilen 7 und 9, insbesondere Blechen, hergestellt werden kann. Die Elektroden 3 und 5 werden vorteilhaft an einer geeigneten Stelle, an dem Widerstandspunkt 11, der zwischen den nicht von der Erfindung umfassten Vorsprüngen 17 der Abstandshaltevorrichtung 15 liegt, positioniert. Die mittels des Pfeils 19 dargestellte Elektrodenkraft der Schweißelektrode 3 verformt das erste Bauteil 7, wobei dieses bereichsweise elektrisch leitend auf das zweite Bauteil 9 gepresst wird, wodurch der Stromkreis zum Induzieren des Schweißstroms 33 geschlossen wird. Mit einem erhöhten Schweißstrom 33 kann ein Nebenschlussstrom über die nicht von der Erfindung umfassten Vorsprünge 17 der Abstandshaltevorrichtung 15 kompensiert werden, wobei dieser jedoch im Vergleich zu einem direkten Anlagekontakt der Bauteile 7 und 9 derartig gering ist, dass im Bereich des Widerstandspunktes 11 das Fügen der Bauteile 7 und 9 auf sichere und einfache Art und Weise erfolgen kann. Die nicht von der Erfindung umfassten Vorsprünge 17 der Abstandshaltevorrichtung 15 können als spitze Rundbuckel ausgeführt werden, wobei daraus ein hoher Übergangswiderstand resultiert, wobei der Nebenstrom 37 beziehungsweise Nebenschlussstrom gering gehalten werden kann. Die Abstandshaltevorrichtung 15 mit den nicht von der Erfindung umfassten Vorsprüngen 17 dient vorteilhaft lediglich zum Herstellen des Abstands 13, besitzt also keine Funktion bezüglich einer Wärmeführung während des Widerstandspunktschweißens. Wie in den Fig. 1 und 2 dargestellt, fließt nahezu der gesamte Gesamtstrom 35 in Form des Schweißstroms 33 über den Widerstandspunkt 11. Vorteilhaft kann dadurch ein stabiler Schweißprozess bei vergleichsweise dicken Bauteilen 7 und 9 realisiert werden. Die Anzahl der nicht von der Erfindung umfassten Vorsprünge 17 der Abstandshaltevorrichtung 15 kann gegebenenfalls variiert werden, beispielsweise kann eine trapezförmige Anordnung von insgesamt 4 Distanzbuckeln und einer Breite von 16 mm der Überlappungszone 21 gewählt werden. Alternativ und/oder zusätzlich kann die Schweißvorrichtung 1 eine Schweißregelung zum Regeln des Schweißstroms 33 aufweisen.

Erfindungsgemäß werden die Schweißströme gemäß der Darstellung der Fig. 4 mittels des Bandes 23 oder gemäß der nicht von der Erfindung umfassten Fig. 5 - 7 mittels des Bandes 23 oder des weiteren Bandes 27 auf den entsprechenden Widerstandspunkt 11 eingeschnürt. Es ist möglich, dass das Band 23 gemäß der Darstellung der Fig. 4 als Klebeband ausgeführt ist, wobei dieses in einem vorbereitenden Schritt auf einfache Art und Weise auf eines der Bauteile 7 und 9 aufgeklebt werden kann. Alternativ und/oder zusätzlich ist es denkbar, dass das Band 23 klebeadhäsive Eigenschaften aufweist, so dass dieses zusätzlich zum Fügen mittels des Widerstandspunktschweißens Klebekräfte zwischen den Bauteilen 7 und 9 aufbaut.
Gemäß der Darstellung der nicht von der Erfindung umfassten Fig. 5 kann der Abstand zwischen dem Band 23 und dem weiteren Band ca. 5 - 30 mm, insbesondere 10 - 20 mm, vorzugsweise ungefähr 15 mm betragen. Die Schweißelektrode 3 kann in der Mitte, also zwischen dem Band 33 und dem weiteren Band 27 positioniert werden, so dass sich infolge der Anpresskraft der Schweißelektrode 3, die mittels des Pfeils 19 symbolisiert ist, eine Verformungskraft auf das erste Bauteil 7 so wirkt, dass sich die Bauteile 7 und 9 zwischen dem Band 23 und dem weiteren Band 27 bis auf einen Abstand 13 von 0 einander annähern. Dadurch sind die Bauteile 7 und 9 so weit aneinander angenähert, dass ein eventueller Nebenschluss lediglich über bereits hergestellte Widerstandspunkte 11, wie in Fig. 11 gezeigt, erfolgt. Dadurch wird der Schweißstrom 33, der einen überwiegenden Anteil des Gesamtstroms 35 ausmacht, über den Widerstandspunkt 11 geleitet beziehungsweise in diesem konzentriert. Es wird also der überwiegende Teil des Gesamtstroms 35 in Form des Schweißstroms 33 direkt unterhalb der Schweißelektrode 3 zum Fügen der Bauteile 7 und 9 durch diese hindurchgeführt.

Gemäß den Darstellungen der nicht von der Erfindung umfassten Fig. 6 und 7, bei denen die Bänder 23 keine Aussparungen 25 aufweisen, kann der elektrische Kontakt nicht lediglich mittels der Anpresskraft der Schweißelektrode 3 erfolgen. Zunächst wird das Band 23 aufgeschmolzen, so dass dieses zum Herstellen des elektrisch leitfähigen Anlagekontakts unter Verformung des ersten Bauteils 7 verdrängt werden kann. Hierzu kann im Bereich der Schweißelektrode 3 eine ausreichende Menge an Wärme erzeugt werden, so dass das Band 23 aufschmilzt.

Gemäß der nicht von der Erfindung umfassten Darstellung der Fig. 6 wird zunächst der Schweißpunkt 29 zum Leiten des Vorwärmstroms 31 gesetzt. Danach kann ein erster Schweißpunkt an einem ersten Widerstandspunkt 11 gesetzt werden. Weitere Schweißpunkte an weiteren Widerstandspunkten 11 können mittels der bereits gesetzten benachbarten Widerstandspunkte 11 vorgewärmt werden.

Gemäß der nicht von der Erfindung umfassten Darstellung der Fig. 7 erfolgt die Vorwärmung ohne Fixierpunkt 29 aufgrund der elektrisch leitfähigen Eigenschaft des Bandes 23.

Vorteilhaft können bei den Bändern 23 der nicht von der Erfindung umfassten Darstellung gemäß den Fig. 6 und 7 die Widerstandspunkte 11 durch einfaches Aufdrücken der Schweißelektrode 3 an einer beliebigen Stelle gewählt werden. Auf Aussparungen 25 analog der Darstellung der Fig. 4 und 5 muss keine Rücksicht genommen werden. Dadurch sind insbesondere unterschiedliche Abstände zwischen den Widerstandspunkten 11, Zickzackanordnungen und/oder Ähnliches denkbar.

Alternativ und/oder zusätzlich kann eine Schweißregelung eingesetzt werden.

Alternativ und/oder zusätzlich ist es denkbar, die Blindelektrode 5 für jeden der Widerstandspunkte 11 gezielt so zu positionieren, dass sich ein optimaler Schweißstrom 33 und/oder ein optimaler Vorwärmstrom 31 und/oder ein möglichst geringer Nebenstrom 37 ergibt. Vorteilhaft können dadurch auch schwierige Falzschweißungen, die insbesondere nur einseitig zugänglich sind, durchgeführt werden.

Gemäß den Darstellung der Fig. 10 und 11 fließt der Gesamtstrom 35 zunächst als Vorwärmstrom 31 über einen benachbarten bereits hergestellten Schweißpunkt und dient zur Erwärmung und Aufschmelzung des Bandes 23, also der Isolierschicht zwischen den Bauteilen 7 und 9.

### Bezugszeichenliste

- 1: Schweißvorrichtung
- 3: Schweißelektrode
- 5: Blindelektrode
- 7: erstes Bauteil
- 9: zweites Bauteil
- 11: Widerstandspunkt
- 13: Abstand
- 15: Abstandshaltevorrichtung
- 17: Vorsprünge
- 19: Pfeil
- 21: Überlappungszone
- 23: Band
- 25: Aussparungen
- 27: Band
- 29: Fixierpunkt
- 31: Vorwärmstrom
- 33: Schweißstrom
- 35: Gesamtstrom
- 37: Nebenstrom

## Patentansprüche

1. Verfahren zum Fügen eines ersten Bauteils (7) mit einem zweiten Bauteil (9) mittels eines einseitigen Widerstandspunktschweißens, mit:
- Herstellen eines Abstands (13) zwischen dem ersten Bauteil (7) und dem zweiten Bauteil (9) im Bereich eines Widerstandspunkts (11) des Widerstandspunktschweißens mittels einer Abstandshaltevorrichtung (15),
- einseitiges Anpressen einer Schweißelektrode (3) auf den Bereich des Widerstandspunkts (11), und dabei
- Annähern der Bauteile (7, 9) zum lokalen Herstellen eines elektrisch leitenden Anlagekontakts zwischen den Bauteilen (7, 9), wobei die Bauteile (7, 9) benachbart des Widerstandspunkts zumindest bereichsweise beabstandet bleiben,
- Herstellen eines elektrisch leitenden Anlagekontakts zwischen dem zweiten Bauteil (9) und einer Blindelektrode (5) des Widerstandspunktschweißens,
- einseitiges Anpressen der Schweißelektrode (5) an das erste Bauteil (7) und dabei
- Herstellen eines elektrischen Schweißstroms (33) von der Blindelektrode (5) über das zweite Bauteil (9), den Widerstandspunkt (11) der Bauteile (7, 9), das erste Bauteil (7) zu der Schweißelektrode (3) zum Aufschmelzen des Widerstandspunkts (11) der Bauteile (7, 9), **dadurch gekennzeichnet, dass** zum Herstellen einer Konzentration des Schweißstroms (33) zwischen Schweißelektrode (3) und dem Bereich des Widerstandspunktes (11) ein Isolierband (23) der Abstandshaltevorrichtung (15) zwischen die Bauteile (7,9) eingeführt wird, wobei das Isolierband zumindest eine Aussparung aufweist, wobei die Bauteile (7,9) während des Widerstandspunktschweißens durch die zumindest eine Aussparung (25) hindurch einander im Bereich des jeweiligen Widerstandspunkts (11) lokal einander angenähert werden und den jeweiligen Widerstandspunkt (11) umgebend die isolierende Wirkung des Isolierbandes (23) erhalten bleibt.

## Claims

1. Method for joining a first component (7) to a second component (9) by means of one-sided resistance spot welding, comprising:
- producing a spacing (13) between the first component (7) and the second component (9) in the region of a resistance spot (11) of the resistance spot welding by means of a spacer device (15),
- pressing a welding electrode (3) onto the region of the resistance spot (11) from one side, and
- bringing the components (7, 9) closer together for the local production of an electrically conductive butt contact between the components (7, 9), wherein the components (7, 9) remain spaced apart, at least in some areas, adjacent to the resistance spot,
- producing an electrically conductive butt contact between the second component (9) and a dummy electrode (5) of the resistance spot welding,
- pressing the welding electrode (5) onto the first component (7) from one side and
- producing an electric welding current (33) from the dummy electrode (5) via the second component (9), the resistance spot (11) of the components (7, 9), the first component (7) to the welding electrode (3) to melt the resistance point (11) of the components (7, 9), **characterized in that** in order to produce a concentration of the welding current (33) between welding electrode (3) and the region of the resistance spot (11), an insulating strip (23) of the spacer device (15) is inserted between the components (7, 9), wherein the insulating strip has at least one cut-out, wherein, during the resistance spot welding, the components (7,9) are brought closer to each other locally through the at least one cut-out (25) in the region of the respective resistance spot (11), and the insulating action of the insulating strip (23) surrounding the respective resistance spot (11) is maintained.

## Revendications

1. Procédé pour joindre une première pièce structurale (7) à une deuxième pièce structurale (9) par soudage unilatéral par points par résistance, comprenant :
- la création d'un espace (13) entre la première pièce structurale (7) et la deuxième pièce structurale (9) dans la zone d'un point de résistance (11) du soudage par points par résistance au moyen d'un dispositif d'écartement (15),
- l'application unilatérale d'une électrode de soudage (3) sur la zone du point de résistance (11) et ainsi,
- le rapprochement des pièces structurales (7, 9) pour créer localement un contact conducteur de l'électricité entre les pièces structurales (7, 9), dans lequel les pièces structurales (7, 9) restent espacées au moins par zones à proximité du point de résistance,
- l'établissement d'un contact d'appui électriquement conducteur entre la deuxième pièce structurale (9) et une électrode aveugle (5) de la soudure par points par résistance,
- l'application unilatérale de l'électrode de soudage (5) sur la première pièce structurale (7) et ainsi,
- la production d'un courant de soudage électrique (33) depuis l'électrode aveugle (5), par l'intermédiaire de la deuxième pièce structurale (9), du point de résistance (11) des pièces structurales (7, 9), de la première pièce structurale (7), jusqu'à l'électrode (3), pour provoquer la fusion du point de résistance (11) des pièces structurales (7, 9),
**caractérisé en ce que**, pour produire une concentration du courant de soudage (33) entre l'électrode de soudage (3) et la zone du point de résistance (11), une bande isolante (23) du dispositif d'écartement (15) est introduite entre les pièces structurales (7, 9),
dans lequel la bande isolante présente au moins un évidement, dans lequel les pièces structurales (7, 9) sont rapprochées localement l'une de l'autre par soudage par points par résistance à travers l'au moins un évidement (25) dans la zone du point de résistance (11) respectif et l'effet isolant de la bande isolante (23) est maintenu autour du point de résistance (11) respectif.
